# DEMANDE DE BREVET EUROPEEN

(11) **EP 0 636 453 A1**
(43) Date de publication de la demande: **01.02.1995**
(21) Numéro de dépôt: 94420216.7
(22) Date de dépôt: 26.07.1994
(51) Int. Cl.: B23Q 11/00, B23Q 5/58, G05D 13/30

(54) **Dispositif de sécurité équipant un vérin d'équilibrage d'une charge et fonctionnant à partir d'une information sur la vitesse de déplacement de la tige du vérin**

(30) Priorité: 26.07.1993 FR 9309465
(71) Demandeur: MORANT DEVELOPPEMENT Société à Responsabilité Limitée :, F-69200 Venissieux (FR)
(72) Inventeur: Chardenoux, Bernard Antoine, F-69009 Lyon (FR)
(74) Mandataire: Thibault, Jean-Marc

(57) **Abrégé**

- L'objet de l'invention concerne un dispositif de sécurité par un vérin d'équilibrage (**4**) d'une charge. Le dispositif selon l'invention comporte :
. un système (**13**) conçu pour apprécier la vitesse de déplacement de la tige (**5**) de piston du vérin,
. et des moyens (**14**) aptes à commander le fonctionnement d'un appareil (**15**) de blocage de la tige du vérin, lorsque la vitesse de la tige détectée par le système (**13**) dépasse une valeur critique prédéterminée.

## Description

La présente invention concerne le domaine technique général de la manutention d'une charge au sens général, et elle vise, plus précisément, le domaine du déplacement vertical d'une charge à l'aide d'un vérin dit d'équilibrage ou d'apesanteur.

L'invention trouve une application particulièrement avantageuse dans le domaine des appareils de manipulation de charges, installés à poste fixe le long d'une chaîne de montage ou de fabrication, notamment de véhicules.

Dans le domaine technique préféré ci-dessus, il est connu, dans l'état de la technique, d'utiliser un appareil de manutention comportant un bâti porteur qui, en général, est monté pour être suspendu et guidé en déplacement horizontal sur une voie de circulation. Un vérin d'équilibrage, en général de type pneumatique, est monté verticalement sur le bâti porteur. La tige de piston du vérin est reliée à un chariot guidé en déplacement vertical sur le bâti. Le chariot est équipé, généralement, d'un bras qui s'étend en porte-à-faux à partir du bâti, en vue de permettre le support de la charge à manipuler. Une poignée de manoeuvre est montée sur le chariot pour permettre, à un opérateur, d'assurer, à l'aide du vérin d'équilibrage, la montée ou la descente du chariot en fonction de la nature de l'opération à effectuer avec la charge.

Les appareils de manutention de ce type sont, en général, équipés de divers dispositifs permettant, lors de l'apparition d'une panne électrique ou pneumatique, d'arrêter le déplacement de la charge en vue d'assurer la sécurité de l'opérateur et la protection de la charge transportée et des divers appareils ou pièces placés dans l'environnement immédiat de l'appareil de manutention.

Les dispositifs de sécurité utilisés doivent être capables de déceler aussi bien une panne électrique que pneumatique. De plus, ces dispositifs de sécurité doivent offrir un fonctionnement totalement fiable pour assumer la fonction à laquelle ils sont dévolus. De ce fait, les dispositifs de sécurité proposés s'avèrent relativement complexes et exigent des opérations de maintenance non négligeables. Par ailleurs, de tels dispositifs ne permettent pas d'atteindre une sécurité totale, aussi bien pour les opérateurs que pour les charges à transporter ou les pièces ou les machines placées au voisinage de l'appareil de manutention. En effet, il a été constaté que certaines manipulations conduisaient à un transport brutal de la charge, entraînant un risque de détérioration de la charge transportée ou de la pièce sur laquelle la charge doit être montée. Dans certains cas, le déplacement brusque de la charge risque de porter atteinte à la sécurité de personnes situées dans l'environnement proche du système de manutention, voire même de l'opérateur lui-même.

L'objet de la présente invention vise donc à remédier aux divers inconvénients énoncés ci-dessus en proposant un système de sécurité pour un vérin d'équilibrage d'une charge, adapté pour offrir une sécurité aussi bien lors de l'apparition de pannes électrique et pneumatique, que lorsque les conditions d'utilisation normales de l'appareil de manutention sont dépassées.

Pour atteindre cet objectif, le dispositif de sécurité pour un vérin d'équilibrage d'une charge comporte, selon l'invention :
- un système conçu pour apprécier la vitesse de déplacement de la tige de piston du vérin,
- et des moyens aptes à commander le fonctionnement d'un appareil de blocage de la tige du vérin, lorsque la vitesse de la tige détectée par le système dépasse une valeur critique prédéterminée.

Selon une caractéristique avantageuse de l'invention, le système apprécie la vitesse de déplacement de la tige du vérin à partir du débit du fluide d'alimentation du vérin. Ce système d'appréciation de la vitesse comporte :
- un passage calibré placé sur la canalisation d'alimentation en fluide du vérin,
- et deux chambres à volume inversement variable, délimitées de part et d'autre d'une paroi déformable et communiquant avec des parties de la canalisation d'alimentation placées respectivement en aval et en amont du passage calibré.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **Fig. 1** est une vue schématique en élévation montrant un système de manipulation équipé d'un dispositif de sécurité conforme à l'invention.

La **Fig. 2** représente de façon schématique le dispositif de sécurité selon l'invention.

La **Fig. 3** est une vue en coupe montrant un exemple de réalisation d'un détail caractéristique de l'invention.

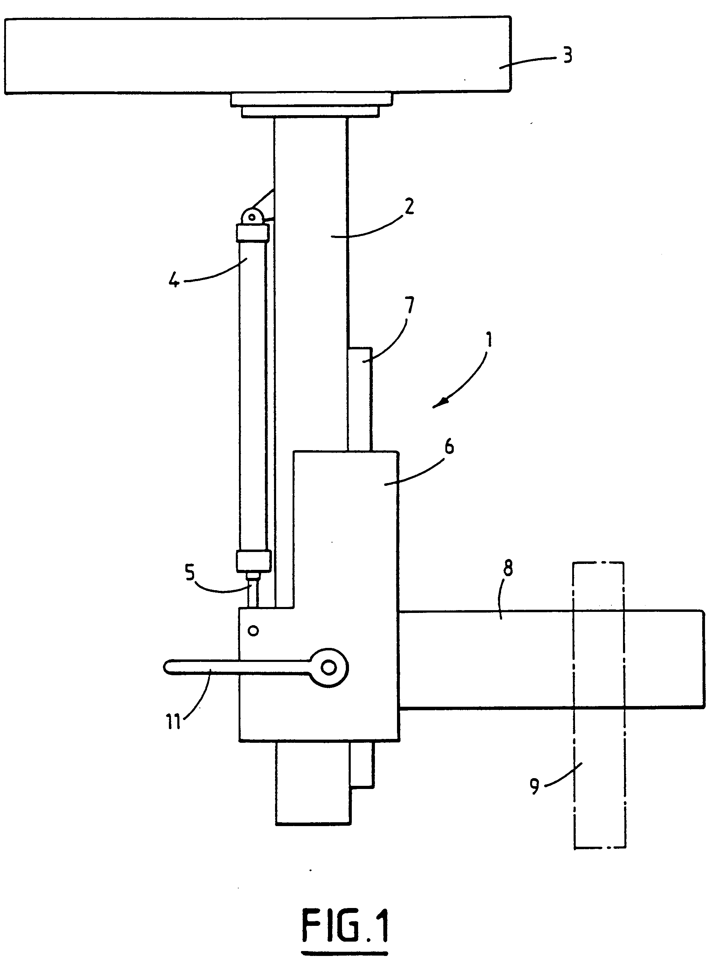

L'appareil de manutention **1**, représenté à titre d'exemple à la **Fig. 1**, comporte un bâti porteur **2** monté pour être suspendu et, de préférence, également guidé en déplacement horizontal sur une voie de guidage **3** de tous types appropriés. Sur le bâti porteur **2** est monté, selon une direction verticale, un vérin d'équilibrage **4** dont la tige de piston **5** est fixée à un chariot **6** adapté pour coulisser le long d'une glissière verticale **7** portée par le bâti **2**. Dans l'exemple illustré, le chariot **6** est pourvu d'un bras **8** s'étendant en porte-à-faux à partir du bâti **2** pour permettre le support d'une charge **9** au sens général, représentée à titre schématique. Le vérin **4** assure l'équilibrage de la charge **9** portée par le chariot **6** qui est destiné à être déplacé en coulissement vertical ascendant ou descendant, par l'intermédiaire d'une poignée de manoeuvre **11**.

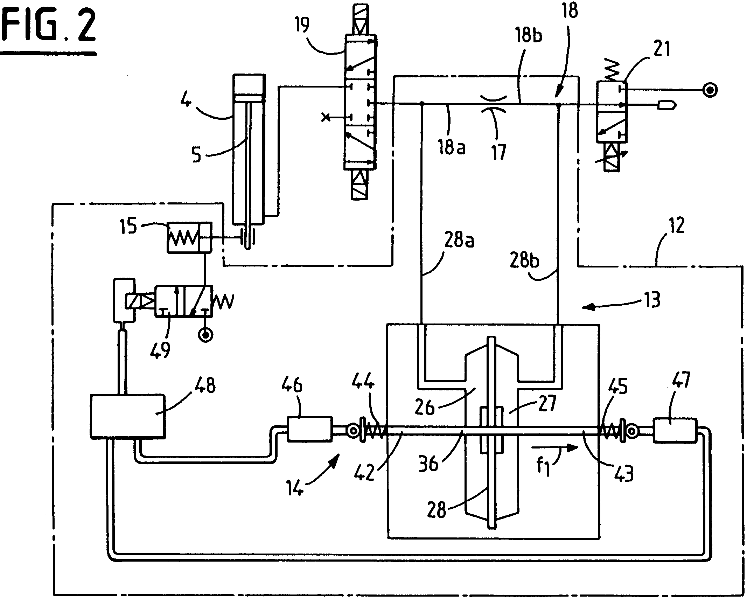

Tel que cela ressort plus précisément de la **Fig. 2**, le vérin d'équilibrage **4** est équipé d'un dispositif de sécurité **12** comportant un système **13** conçu pour apprécier la vitesse de déplacement de la tige **5** du vérin **4**. Le dispositif de sécurité **12** comporte également des moyens **14** aptes à commander le fonctionnement d'un appareil **15** assurant le blocage de la tige **5** du vérin, lorsque la vitesse de cette tige dépasse une valeur critique ou de seuil prédéterminée.

Dans l'exemple illustré, le système **13** d'appréciation de la vitesse comporte un passage calibré, un étrangleur ou un ajutage **17** placé sur la canalisation **18** qui assure l'alimentation en fluide, par exemple en air, du vérin **4**. D'une manière classique, la canalisation **18** assure l'alimentation en fluide du vérin **4**, par l'intermédiaire d'un distributeur **19**, à une valeur de pression déterminée par une électrovanne proportionnelle **21**.

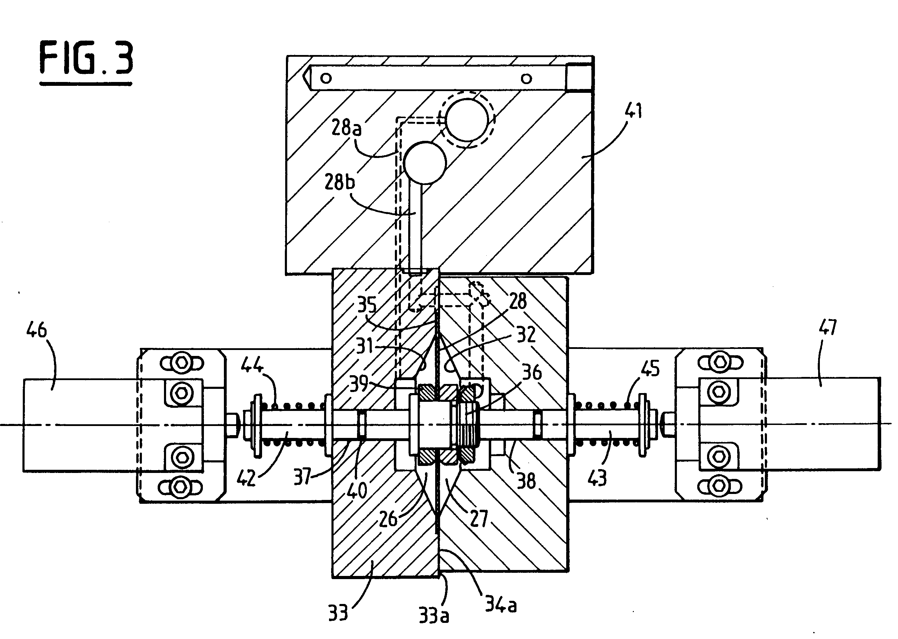

Le système **13** comporte, également, deux chambres **26**, **27** à volume inversement variable délimitées, de part et d'autre, d'une paroi déformable **28**. Les chambres **26** et **27** sont raccordées par des conduites **28a**, **28b** aux parties **18a**, **18b** de la canalisation **18**, situées respectivement en aval et en amont du passage calibré **17**. Dans la forme de réalisation illustrée à la **Fig. 3**, les chambres **26** et **27** sont délimitées par deux cavités **31**, **32** aménagées à partir de la face transversale **33a**, **34a** de deux demi-coquilles **33**, **34**. La face transversale **33a** est pourvue d'une rainure **35** bordant la cavité **31** et destinée à recevoir la périphérie de la paroi déformable **28** qui se trouve pincée entre les deux faces **33a**, **34a** des demi-coquilles, permettant d'obtenir une étanchéité périphérique entre les deux cavités **31**, **32**. La paroi déformable **28** est montée, à sa partie centrale, sur un axe **36** guidé en coulissement, selon une direction sensiblement perpendiculaire aux faces transversales de la paroi **28**, dans deux alésages **37**, **38** ménagés dans les demi-coquilles **33**, **34**. L'axe **36** est pourvu de deux rondelles **39** disposées de chaque côté des faces transversales de la paroi **28** pour assurer une étanchéité entre les chambres **26**, **27** et une liaison rigide de la paroi **28** avec l'axe **36**. Au niveau de chaque alésage **37**, **38**, l'axe **36** est équipé d'un joint torique **40** assurant l'étanchéité des chambres **26**, **27** qui communiquent avec la canalisation d'alimentation **18** par l'intermédiaire des conduites **28a**, **28b** formées par des canaux ménagés dans les demi-coquilles **33**, **34** et dans un bloc **41**, dans lequel est monté ou aménagé le passage calibré **17**.

Le dispositif **13** de détermination de la vitesse de la tige de vérin, tel que décrit ci-dessus et dont le fonctionnement sera explicité dans la suite de la description, est destiné à coopérer avec des moyens **14** de commande de l'appareil de blocage **15** qui, dans l'exemple illustré, est formé par un vérin dont le mouvement de sa tige de piston est adapté pour bloquer la tige **5** du vérin d'équilibrage. Selon la variante illustrée à la **Fig. 3**, les moyens de commande **14** sont formés par deux prolongements **42**, **43** de l'axe **36**, s'étendant en saillie respectivement par rapport aux demi-coquilles **33**, **34**. Les prolongements **42**, **43** sont pourvus chacun d'un organe élastique de rappel, respectivement **44**, **45**. En relation de proximité des prolongements **42**, **43** des demi-coquilles, sont placés des capteurs ou des détecteurs **46**, **47**. Par exemple, les capteurs **46**, **47** sont destinés à être actionnés par les extrémités respectivement des prolongements **42**, **43**, de manière à délivrer un signal électrique qui, transmis à un circuit de contrôle **48**, permet de piloter un distributeur **49** de commande du vérin de blocage **15**.

Le fonctionnement du dispositif de sécurité **12** selon l'invention découle directement de la description qui précède.

Il doit être considéré que la vitesse du vérin **4** est proportionnelle au débit du fluide alimentant le vérin et traversant la canalisation **18**. Lorsque la vitesse de la tige **5** du vérin dépasse une valeur critique de vitesse choisie, la section de passage de l'étrangleur **17** ne permet pas d'assurer le passage de la totalité du fluide, de sorte qu'apparaît une différence de pression entre les parties aval **18a** et amont **18b** du passage calibré **17**. Il s'ensuit une dépression dans une chambre **26** ou **27** et une surpression dans l'autre chambre **27** ou **26**, conduisant à une déformation axiale de la paroi **28**. A titre d'exemple, il est considéré que la pression, prise à la partie aval **18a**, est supérieure à la pression prise à la partie amont **18b**, en raison par exemple d'une vitesse trop rapide de sortie de la tige **5**. L'apparition de cette différence de pression, de part et d'autre du passage calibré **17**, conduit à une surpression dans la chambre **26** et à une dépression dans la chambre **27**. La membrane **28** se déforme, entraînant le déplacement axial de l'axe d'actionnement **36** suivant la flèche **f₁**. Le prolongement **43** actionne le capteur **47** qui délivre un signal assurant la commande du vérin **15** venant bloquer la tige **5** du vérin **4**. Le rétablissement des pressions en amont et en aval du passage calibré **17** conduit à l'équilibre des pressions dans les chambres **26**, **27** et au retour de la paroi déformable **28** à sa position de repos, sous l'effet du ressort **45**. Bien entendu, l'apparition d'une différence de pression de sens opposé, de part et d'autre du passage calibré **17**, conduit à un fonctionnement similaire opposé.

Le dispositif de sécurité selon l'invention permet de bloquer la tige **5** du vérin d'équilibrage, dès que sa vitesse de montée ou de descente dépasse une valeur de vitesse critique choisie. Il est à noter que la valeur de cette vitesse critique est ajustable par le choix de la section de passage conférée à l'étrangleur **17**. Plus la section de passage de l'étrangleur **17** augmente, plus la valeur de la vitesse critique est grande, toutes choses restant égales par ailleurs. Bien entendu, il doit être considéré que la valeur critique de vitesse est conditionnée également par la surface de la paroi déformable **28**, la force de pression des ressorts **44**, **45** et la distance séparant les prolongements axiaux **42**, **43** des capteurs **46**, **47**. Ainsi, une modification de ces paramètres conduit à une autre valeur de pression différentielle de part et d'autre du passage calibré **17**, pour laquelle l'actionnement des capteurs **46**, **47** est possible.

L'objet de l'invention présente donc l'avantage de constituer un dispositif assurant une sécurité totale, lorsqu'intervient, par exemple, une panne électrique ou pneumatique ou un dérèglement du circuit électronique de commande de l'électrovanne proportionnelle. Dans de telles hypothèses, qui risquent de conduire à un déplacement de la tige de vérin à une vitesse trop importante, le dispositif de sécurité selon l'invention permet de bloquer immédiatement le vérin d'équilibrage. De plus, un tel dispositif de sécurité permet de stopper le déplacement de la tige de vérin, lorsque l'appareil de manutention est utilisé avec une vitesse de déplacement trop importante correspondant à une manipulation trop brutale.

Dans la description qui précède, il est à noter que le système pour apprécier la vitesse de déplacement de la tige du vérin est réalisée à partir du débit du fluide d'alimentation du vérin. Bien entendu, il pourrait être envisagé de mettre en oeuvre divers autres systèmes pour apprécier la vitesse de déplacement de la tige du vérin. Il pourrait être prévu, à cet effet, de mettre en oeuvre des systèmes de type optique, par exemple.

L'invention n'est pas limitée aux exemples décrits et représentés, car diverses modifications peuvent y être apportées sans sortir de son cadre.

## Revendications

**1 -** Dispositif de sécurité pour un vérin d'équilibrage (**4**) d'une charge (**9**), caractérisé en ce qu'il comporte :
- un système (**13**) conçu pour apprécier la vitesse de déplacement de la tige (**5**) de piston du vérin,
- et des moyens (**14**) aptes à commander le fonctionnement d'un appareil (**15**) de blocage de la tige du vérin, lorsque la vitesse de la tige détectée par le système (**13**) dépasse une valeur critique prédéterminée.

**2 -** Dispositif de sécurité selon la revendication 1, caractérisé en ce que le système (**13**) apprécie la vitesse de déplacement de la tige (**5**) du vérin à partir du débit du fluide d'alimentation du vérin.

**3 -** Dispositif de sécurité selon la revendication 2, caractérisé en ce que le système (**13**) d'appréciation de la vitesse comporte :
- un passage calibré (**17**) placé sur la canalisation (**18**) d'alimentation en fluide du vérin,
- et deux chambres (**26**, **27**) à volume inversement variable, délimitées de part et d'autre d'une paroi déformable (**28**) et communiquant avec des parties (**28a**, **28b**) de la canalisation d'alimentation, placées respectivement en aval et en amont du passage calibré (**17**).

**4 -** Dispositif de sécurité selon la revendication 3, caractérisé en ce que le passage calibré (**17**) présente une section de passage ajustable permettant de régler la valeur critique de la vitesse au-delà de laquelle l'appareil de blocage (**15**) est actionné.

**5 -** Dispositif de sécurité selon la revendication 1, caractérisé en ce que les moyens de commande (**14**) sont constitués par deux prolongements (**42**, **43**) s'étendant perpendiculairement et de part et d'autre de la paroi déformable, les prolongements (**42**, **43**) étant destinés à actionner chacun un capteur (**46**, **47**) relié à l'appareil (**15**) de blocage de la tige de vérin.

**6 -** Dispositif de sécurité selon la revendication 5, caractérisé en ce que les prolongements d'actionnement (**42**, **43**) sont équipés chacun d'un organe élastique de rappel (**44**, **45**).

**7 -** Vérin d'équilibrage pour une charge, caractérisé en ce qu'il est équipé d'un dispositif de sécurité (**12**) conforme à la revendication 1.
